# EUROPEAN PATENT SPECIFICATION

(11) **EP 2 934 183 B1**
(45) Date of publication and mention of the grant of the patent: **13.06.2018**
(21) Application number: 13818631.7
(22) Date of filing: 19.12.2013
(51) Int. Cl.: A23L 27/30, A23L 2/60, A23K 20/163

(54) **COMPOSITION COMPRISING STEVIOL GLYCOSIDE AND MALTOSE**
ZUSAMMENSETZUNG MIT STEVIOLGLYKOSID UND MALTOSE
COMPOSITION COMPRENANT UN STÉVIOL GLYCOSIDE ET MALTOSE

(30) Priority: 20.12.2012 EP 12008473
(43) Date of publication of application: 28.10.2015
(73) Proprietor: Cargill, Incorporated, Wayzata, MN 55391 (US)
(72) Inventor: AZOFEIFA, Midey Gonzalez, NL-1141 AB Monnickendam (NL); VAN BOKKELEN, Reginald, B-1420 Braine-l'Alleud (BE)
(74) Representative: Dottridge, Cass A.C.
(86) International application number: PCT/US2013/076555
(87) International publication number: WO 2014/100410

(56) References cited:
- WO-A1-2010/025158
- WO-A1-2011/161027
- WO-A1-2011/161633
- WO-A2-2012/054743
- KR-A- 2012 093 461
- US-A1- 2008 108 710
- DATABASE WPI Week 197746 Thomson Scientific, London, GB; AN 1977-82203Y XP002697705, & JP S52 120171 A (MORITA KAGAKU KOGYO KK) 8 October 1977 (1977-10-08)
- DATABASE WPI Week 198512 Thomson Scientific, London, GB; AN 1985-072243 XP002697706, & JP S60 27360 A (KONDO K) 12 February 1985 (1985-02-12)
- DATABASE WPI Week 198430 Thomson Scientific, London, GB; AN 1984-184627 XP002569572, & JP S59 102372 A (KONDO K) 13 June 1984 (1984-06-13)
- DATABASE WPI Week 201264 Thomson Scientific, London, GB; AN 2012-M26329 XP002697707, & CN 102 550 689 A (SHANGRONG TECHNOLOGY CO LTD SUZHOU IND P) 11 July 2012 (2012-07-11)
- DATABASE WPI Week 197915 Thomson Scientific, London, GB; AN 1979-28604B XP002697708, & JP S54 28868 A (NITO Y) 3 March 1979 (1979-03-03)
- DATABASE WPI Week 201151 Thomson Scientific, London, GB; AN 2011-H91138 XP002697709, & CN 102 078 366 A (YANG J) 1 June 2011 (2011-06-01)
- DATABASE WPI Week 200914 Thomson Scientific, London, GB; AN 2009-B25594 XP002697710, & CN 101 268 799 A (WANG Y) 24 September 2008 (2008-09-24)
- DATABASE WPI Week 201150 Thomson Scientific, London, GB; AN 2011-J26585 XP002697711, & CN 102 090 432 A (UNIV NANKAI BINHAI) 15 June 2011 (2011-06-15)

## Description

### Field of the Invention

The invention relates to a composition comprising maltose and steviol glycosides. The maltose can be present in said composition in the form of crystalline maltose and/or in the form of a maltose containing syrup having a maltose content of from 25 to 80 weight/weight % based on the dry substance of the syrup (w/w % db). The composition is particularly interesting for its property of masking the typical off taste caused by steviol glycoside. Further, the invention relates to a method to make said composition and a use of said composition. The composition can be used in the production of food products, particularly beverages, more particularly low calorie beverages.

### Background of the Invention

The beverage industry has been given a strong emphasis to the development of reduced calorie beverages over the last 20 years. Such beverages are commonly known as reduced calories, light beverages, diet beverages, low calorie beverages, zero calorie beverages, mostly depending on the amount of calorie reduction in comparison to a regular, i.e. full calorie counterpart. Yet these beverages often record lower consumer acceptance rate as they lack the mouthfeel, body and the overall sensory performance of their regular counterpart. More specifically, available non caloric, high potency sweeteners (HPC) for the formulation of reduced calorie beverages are limited in their ability to reproduce a 'clean' sucrose-like taste. At used dosage, most HPS exhibit unpleasant off-taste identified as bitter, metallic salty or liquorice-like. A particularly popular HPC nowadays is represented by the extract of the *Stevia rebaudiana* plant. The sweet steviol glycosides have functional and sensory properties superior to those of many high potency sweeteners. They are natural and effectively perceived as such in the consumer minds, unlike artificial sweeteners such as Aspartame, acesulphame K, saccharin and the like.

The extract of *Stevia rebaudiana* plant contains a mixture of different sweet diterpene glycosides, which have a single base steviol and differ by the presence of carbohydrate residues at positions C13 and C19. These glycosides accumulate in Stevia leaves and compose approximately 10% - 20% of the total dry weight of the leaves. Typically, on a dry weight basis, the four major glycosides found in the leaves of Stevia are Dulcoside A, Rebaudioside C, Rebaudioside A and Stevioside. Other glycosides identified in Stevia extract include Rebaudioside B, D, E and F, Steviolbioside and Rubusoside. The sweeteness potency of Stevioside is around 210 time higher than sucrose, Rebaudioside A in between 200 and 400 times, and Rebaudioside C and Dulcoside A around 50 to 120 times (Phillips, 1989 and Tanaka 1997). However, also the use of steviol glycosides in food products such as beverages is limited because they provide a strong off taste described similarly as for other HPC as bitter, metallic salty or liquorice-like. This undesirable property seems to be lower for some steviol glycosides, e.g. for the Rebaudioside C component.

There is thus a need, especially in the beverage industry for methods to improve the sensory performances of reduced calories drink and compensate for the mouthfeel drift and unpleasant notes associated with steviol glycosides.

For example, US patent No 4,956,191 suggests that carbonated drinks which contain mixtures of saccharin or the Stevia extract with aspartame tend to be less organoleptically appealing than their sugar counterpart.

WO 2010/054829 A1 discloses a blend of stabilisers to balance the body and mouthfeel of reduced calories beverages.

US 2010/0255171 A1 describes the use of highly purified Stevioside, Rebaudioside A and a purified sweet steviol glycoside mixture prepared from sweet glycoside extracts obtained from *Stevia rebaudiana* Bertoni leaves.

WO2012/128775 A1 describes a taste and flavour enhancer composition comprising glycosylated steviol glycosides.

JP S52120171 A describes steviol glycoside sweeteners with a reduced off-taste, prepared by adding a natural sugar such as maltose.

It is therefore an object of the present invention to provide food, feed or pet food products containing steviol glycosides, in particular beverages, having desirable tasting properties.

### Summary of the Invention

The present invention relates to a composition comprising maltose and steviol glycoside, as described in claim 1.

The present invention further relates to a beverage comprising the composition of the present invention and other beverage ingredients.

The present invention further relates to a method for making a food, beverage, feed, or pet food product comprising the step of adding the composition of the present invention to the food, beverage, feed or pet food product in the manufacturing process.

### Detailed Description

The present invention relates to a composition comprising maltose and steviol glycoside.

Maltose is a disaccharide formed from two units of glucose. The maltose for the purpose of the present invention can be present in said composition in the form of crystalline maltose and/or in the form of a maltose containing syrup. Preferably, the maltose is present in said composition in the form of a maltose containing syrup.

Preferably the maltose containing syrup has a maltose content of from 25 to 80 weight/weight % based on the dry substance of the syrup (w/w % db). Therefore, it can be referred to as a high maltose containing syrup. Preferably, the maltose content is from 30 to 80 w/w%, more preferably from 40 to 80 w/w% db, even more preferably from 50 to 80 w/w% db, yet even more preferably from 60 to 80 w/w% and most preferably from 70 to 75 w/w% db.

The maltose containing syrup for the purpose of the present invention can be obtained in any suitable way such as for example: by dissolving crystalline maltose into other syrup, preferably a carbohydrate syrup, such as a glucose syrup; by dissolving crystalline maltose into water; or through a carbohydrate hydrolysis process, preferably through starch hydrolysis and liquefaction process. The maltose containing syrup for the purpose of the present invention is preferably a maltose containing glucose syrup having a maltose content as described above. Such syrup can be referred to as high maltose containing glucose syrup. Such glucose syrup can be obtained by dissolving crystalline maltose into glucose syrup, by dissolving crystalline maltose and crystalline glucose into water, but it is preferably produced by acid and/or enzymatic starch hydrolysis and liquefaction process. The process conditions are such that a glucose syrup having a maltose content as described above is obtained.

The steviol glycoside can be one or more of following molecules Dulcoside A, Rebaudioside C, Rebaudioside A, Stevioside, Rebaudioside B, D, E and F (Midey to check), Steviolbioside and Rubusoside. Preferably it is a mixture of two or more of the above mentioned component. More preferably, it is a mixture of two or more of Rebaudioside A, B, C and D.

Preferably the steviol glycoside has a purity of at least 80%, preferably of at least 85%, more preferably of at least 90%, preferably of at least 95% more preferably of at least 99%. By purity is meant the amount of the molecules listed above in the product.

The weight ratio of the maltose content of the composition to the steviol glycoside is from 30 to 480. Preferably the weight ratio of the maltose content of the composition to the steviol glycoside is from 35 to 475, from 37.5 to 475, from 40 to 470, from 45 to 465, from 50 to 460, from 55 to 455, from 60 to 450, from 65 to 445, from 70 to 440, from 75 to 435, from 80 to 430, from 85 to 425, from 90 to 420, from 95 to 415, from 100 to 410, from 105 to 405, from 110 to 400, from 115 to 395, from 120 to 390, from 125 to 380, from 130 to 370, from 135 to 270, from 140 to 260, from 150 to 250, from 160 to 240.

When the maltose is in the form of a maltose containing syrup as described above, the weight ratio of the dry substance of the maltose containing syrup to the steviol glycoside can be from 120 to 600, preferably from 140 to 550, more preferably from 150 to 500, even more preferably from 180 to 450, yet even more preferably from 200 to 400, yet even more preferably from 200 to 300, most preferably from 220 to 270.

The composition of the present invention further comprises one or more nutritive sweeteners. The maltose content of the composition is from 2.25 to 52.5 w/w%, more preferably from 3 to 45 w/w%, even more preferably from 3.75 to 37.5 w/w%, yet even more preferably from 4.5 to 33.75, most preferably from 5.25 to 30 w/w% based on the weight of the one or more nutritive sweeteners.

When the maltose is in the form of a maltose containing syrup as described above, said maltose containing syrup is preferably present in an amount of from 15 to 70 w/w%, more preferably, the from 20 to 60 w/w%, even more preferably from 25 to 50 w/w%, yet even more preferably from 30 to 45% w/w, most preferably from 35 to 40% w/w based on the weight of the one or more nutritive sweeteners.

A nutritive sweetener is a sweetener contributing significantly to the caloric load of the beverage. For example, the nutritive sweetener can be sucrose, fructose, high fructose corn syrup, glucose, dextrose, white grape juice, deionised apple juice, chicory, honey, inverted sugar, maple syrup, male sugar, brown sugar molasses, sugar beet molasses, sorghum syrup and the like. Preferably, the nutritive sweetener is sucrose and/or high fructose corn syrup. The nutritive sweetener can be liquid, solid and in particular crystalline.

The composition of the present invention can be in powder form or liquid form.

The composition comprising steviol glycoside, maltose containing syrup and further comprising one or more nutritive sweetener can be further characterized by several parameters such as brix, viscosity, density and friction factor.

The degree Brix (°Brix) of said composition is from 2.5 °Brix to 9 °Brix, preferably from 4 to 8 °Brix, more preferably from 5 to 7 °Brix. °Brix value represents the total amount of dry substance of nutritive sweetener present in the composition. °Brix is measured with a refractometer at 20 °C. Suitable refractometer is for example RFM 80 Bellingam & Stanley.

When the high maltose containing syrup is maltose containing glucose syrup, the composition advantageously has a viscosity of from 1.05mP.S to 1.2mP.s. This viscosity value is valid when no hydrocolloids are present in the composition. Viscosity is measured with a capillary viscosimetry (Ubbelohde) at 25 °C after 15 minutes equilibration.

When the high maltose containing syrup is maltose containing glucose syrup, the composition advantageously has a density of from 1.0100 to 1.0350, preferably from1.0200 to 1.0270. Density is measured at 25.00°C in a oscillating U-tube with a DMA 4500 density meter from Anton Paar Gmbh (Graz, Austria).

When the high maltose containing syrup is maltose containing glucose syrup, the composition advantageously has a friction factor in the range of from 0.4 to 0.5. The friction factor is measured by steel-elastomer tribometry with the Anton Paar MCR 301 Controlled Stress Rheometer serial number 21002742-33025.

Also disclosed is a method for making the composition of the present invention. It comprises mixing the steviol glycoside and the maltose with any suitable mixing device, such as for example a high shear mixer. Suitable high shear mixers are for example Silverson L4RT of Silverson Flashmix 30. Mixing can be done at any suitable temperature for these ingredients and is preferably performed at temperatures of from 15 to 35°C. When a nutritive sweetener is present it can be mixed either together with the steviol glycoside and/or the maltose or added once the steviol glycoside and the maltose are mixed. It is also possible to first mix the maltose and nutritive sweetener and subsequently add the steviol glycoside. The composition can be stored at room temperature (for example 15 to 25°C). As described above, the maltose can be in the form of crystalline maltose and/or in the form of a maltose containing syrup. Preferably, the maltose is in the form of a maltose containing syrup, and even more preferably the maltose containing syrup is a maltose containing glucose syrup.

Also disclosed herein is a food, feed or pet food product comprising the composition of the present invention and other food, feed or pet food ingredients. The present invention further relates to a beverage comprising the composition of the present invention and other beverage ingredients. Said other beverage ingredients can be one or more of water, carbonated or not carbonated; concentrated fruit juice; stabilisators (starches, hydrocolloids such as xanthan gum and the like), acidulants, emulsifiers (such a soy lecithin, modified starches and the like), milk (full fat milk, defatted milk, concentrated milk, powdered milk), soy milk, cocoa powder, coffee extracts, tea extracts, natural flavourings, artificial flavourings, natural colourings, artificial colourings, vitamins, preservatives, cultures and the like. Advantageously the beverage is a milk beverage, such a chocolate milk drink, a yogurt drink, a chocolate drink, a coffee drink, a vegetable milk drink and the like. The amount and combination of ingredients depends on the type of beverage to be produced, the colour, flavour and taste profile of the beverage, nutritional content of the beverage etc. The choice of ingredients and their amount lies well within the skills of the skilled person. It is understood that reference to the form of an ingredient of the beverage should not be taken as a limitation on the form of the ingredient in the beverage product, but rather as a convenient means of describing the ingredient as it is before it is added to the beverage formulation. For example ingredients in powder form (such as cocoa powder or powdered milk) or in concentrated form (such as concentrated fruit juice or concentrated milk) are not found in the finished beverage as a powder or as a concentrate respectively, but are dissolved or dispersed in the finished beverage.

The beverage comprises the composition of the present invention, i.e. the beverage comprises steviol glycosides and comprises maltose. Preferably, the beverage comprises a maltose containing syrup, more preferably a maltose containing glucose syrup as described above. Thus the composition of the present invention can be added as is during the manufacturing process of the beverage. It is also possible to add the steviol glycoside and the maltose separately from each other during the production process of the beverage.

The presence of a nutritive sweetener is usually important for reasons of taste and mouthfeel of the beverage. Maltose has a sweetening power that is reduced compared to nutritive sweeteners in general, especially compared to sucrose, glucose, and fructose. Therefore the presence of a nutritive sweetener is necessary to achieve customer acceptance of the beverage. Therefore also, the amount of maltose is from 2.25 to 52.5 w/w%, more preferably from 3 to 45 w/w%, even more preferably from 3.75 to 37.5 w/w%, yet even more preferably from 4.5 to 33.75, most preferably from 5.25 to 30 w/w% based on the weight of the one or more nutritive sweeteners. In particular, the amount of maltose containing syrup is preferably from 15 to 70 w/w% based on the weight of the one or more nutritive sweeteners. Preferably it is from 20 to 60 w/w%, more preferably form 25 to 50 w/w%, even more preferably from 30 to 45 w/w% and yet even more preferably from 35 to 40 w/w%.

The food, feed or pet food product, and in particular, the beverage of the present invention typically comprises at least 0.05w/w%, preferably at least 0.5 w/w%, more preferably at least 1w/w%, even more preferably at least 2 w/w%, yet even more preferably at least 3 w/w% of the composition of the present invention.

Calorie reduced beverages have fewer calories compared to a beverage comprising essentially sugar as a sweetener. Preferably such reduced calorie beverage have at least 10% fewer calories, more preferably ate least 20% fewer calories, even more preferably at least 50% fewer calories, yet even more preferably at least 75% fewer calories compared to a beverage comprising essentially sugar as a sweetener. Preferably the beverage of the present invention is a low calorie beverage; it has a caloric value of 20kcal/100ml or less, 15 kcal/100ml or less, 12 kcal/100ml or less or 10 kcal/100ml or less. Further it typically has a °Brix value of from 2 to 5, 3 to 5 or 4 to 5. Conventional Brix conversion table is useful to determine the amount in grams of nutritive sweetener present in the beverage. Since 1g of carbohydrate has a caloric value of 4 kcal, the caloric value of the beverage can easily be derived from the °Brix value, taking into account the density. This calculation is well known to the person skilled in the

The present invention further relates to a method for making the food, particularly the beverage, feed or pet food product, of the present invention. It comprises the step of adding steviol glycoside and maltose in the form of the composition of the present invention, to the food, in particular the beverage, feed or pet food product, at any suitable stage of the manufacturing process. When a beverage is concerned, the composition of the present invention is added preferably during the bottling phase of the manufacturing process. Maltose can be in the form of crystalline maltose and/or in the form of maltose containing syrup as described above.

Also disclosed herein is the use of the composition of the present invention for the production of food, feed or pet food products. Preferably the food product is a beverage or a dairy product, such as a yoghurt.

Also disclosed herein is a method to mask the off taste of steviol glycosides in food product, in particular beverage, feed or pet food product. Said method comprises incorporating maltose during the manufacturing process of said food, feed or pet food product. Maltose can be in the form of crystalline maltose and/or maltose containing syrup, as described above. Preferably, the present invention relates to a method to mask the off taste of steviol glycosides in food product, in particular beverage, feed or pet food product, said method comprising incorporating maltose containing syrup during the manufacturing process of said food, in particular beverage, feed or pet food product.

Also disclosed herein is the use of maltose as a masking agent of the off taste of steviol glycoside in food, feed or pet food products. In particular, it relates to the use of maltose as a masking agent for the off taste of steviol glycoside in beverage products. Maltose can be in the form of crystalline maltose and/or maltose containing syrup, as described above. Preferably, the present invention relates to the use of maltose containing syrup as a masking agent of the off taste of steviol glycoside in beverage.

### Examples

Examples 3, 4, 11, 15, 16, 20, 23, 31 and 34 are according to the invention.

The remaining examples are not according to the invention and present for comparative or illustrative purposes only.

### Beverage

Citric acid 50w/w% solution, white table sugar, maltose containing glucose syrup (C*SweetM01521, from Cargill, maltose content 48.9 w/w% db, dry substance 79.6%) and Truvia® are added in the amounts specified in the table below for each sample. Plain city water is added to obtain 1000 ml and the ingredients are mixed with a spoon at room temperature, 20°C, until all are dissolved.

C*SweetM01521 has following more detailed specifications:

| C*Sweet M 01521 | | | | |
|---|---|---|---|---|
| | | Unit | Minimum | Typical Specifications |
| Dry substance | | % | 79,6 | 79,5-80,5 |
| Dx | on d.b. | % | 2,2 | 0,0-6,0 |
| Dp2 | on d.b. | % | 48,9 | 46,0-52,0 |
| Dp3 | on d.b. | % | 20,7 | 15,0-25,0 |
| Colour | o.d. | | 0,15 | -0,5 |
| Ph | 50% w/w | | | 3,5-5,5 |
| Sulpur dioxide | | mg/kg | 0 | 10 |

**Table 1**

| Examples 1-8: 30% calorie reduction in 10 Brix beverage model | | | | | | | |
|---|---|---|---|---|---|---|---|
| Example | Citric acid 50% Solution (g) | Sugar (g) | C*Sweet M01521 (g) | C*Sweet M01521 / Sugar (%) | Truvia® | Water up to | Number of correct reply |
| 1 | 4 | 101.7 | | | | 1000ml | |
| 2 | 4 | 69,5 | 0 | 0,0 | 165 ppm | 1000ml | 12/15^{a} |
| 3 | 4 | 59,6 | 12,56 | 21,1 | 165 ppm | 1000ml | 10/15^{a} |
| 4 | 4 | 49,6 | 25,12 | 50,6 | 165 ppm | 1000ml | 5/15 |
| 5 | 4 | 39,6 | 37,68 | 95,2 | 165 ppm | 1000ml | 5/15 |
| 6 | 4 | 26,6 | 50,24 | 188,9 | 165 ppm | 1000ml | 7/15 |
| 7 | 4 | 19,6 | 62,8 | 320,4 | 165 ppm | 1000ml | 9/15^{a} |
| 8 | 4 | 9,6 | 75,36 | 785,0 | 165 ppm | 1000ml | 11/15^{a} |

| | | | | | | | |
|---|---|---|---|---|---|---|---|
| ^{a:} Difference is statistically significant at the 0.05 propability level | | | | | | | |

The number of correct responses to declare that the product is perceived as similar as the full calorie counterpart is 9 for a triangle test with 15 people and a probability level of 0.05.

**Table 2**

| Examples 9-12: 30% calorie reduction in carbonated cola | | | | |
|---|---|---|---|---|
| Ingredients (g) | 9 | 10 | 11 | 12 |
| Sugar | 105.7 | 72.8 | 47.8 | 22.8 |
| C*SweetM01521 | 0.0 | 0 | 31.4 | 62.8 |
| Potassium sorbate | 0.20 | 0.20 | 0.2 | 0.2 |
| Caffeine | 0.1 | 0.1 | 0.1 | 0.1 |
| Phosphoric acid (75%) | 0.67 | 0.67 | 0.67 | 0.67 |
| Truvia Reb A 80 | 0.0 | 0.12 | 0.12 | 0.12 |
| Cola flavor | 1.8 | 1.8 | 1.8 | 1.8 |
| Carbonated water (8g/L CO₂) up to | 1000 ml | 1000 ml | 1000 ml | 1000 ml |
| Beverage characteristics | | | | |
| °Brix | 10.3 | 7.2 | 7.2 | 7.2 |
| Acidity (%w/v ACA) | 0.065 | 0.065 | 0.065 | 0.065 |
| Density | 1.0383 | 1.0256 | 1.0256 | 1.0256 |
| Taste | | Licorice note Lingering aftertaste | Close to example 9 No lingering aftertaste and less licorice | Less sweet |

| | | | | |
|---|---|---|---|---|
| ACA: Anhydrous citric acid | | | | |

**Table 3**

| Examples 13-16: 30% calorie reduction in carbonated lemon lime | | | | |
|---|---|---|---|---|
| Ingredients (g) | 13 | 14 | 15 | 16 |
| Sugar | 86.35 | 58.7 | 48.7 | 36.7 |
| C*SweetM01521 | 0.0 | 0.0 | 12.6 | 25.12 |
| Potassium sorbate | 0.20 | 0.20 | 0.20 | 0.20 |
| Citric acid | 2.4 | 2.4 | 2.4 | 2.4 |
| Trisodium citrate | 0.3 | 0.3 | 0.3 | 0.3 |
| Truvia Reb A 95 | 0.0 | 0.08 | 0.08 | 0.08 |
| Lemon lime flavor | 1.5 | 1.5 | 1.5 | 1.5 |
| Carbonated water (8g/L CO₂) up to | 1000 ml | 1000 ml | 1000 ml | 1000 ml |
| Beverage characteristics °Brix | 8.7 | 6.1 | 6.1 | 6.1 |
| Acidity (%w/v ACA) | 0.240 | 0.240 | 0.240 | 0.240 |
| Density | 1.0317 | 1.0211 | 1.0211 | 1.0211 |
| Taste | | Medium Licorice note Lingering aftertaste | Less lingering aftertaste and less licorice | Close to example 13 Very sligt lingering aftertaste |

**Table 4**

| Examples 17-20: 30% calorie reduction in carbonated orange drink | | | | |
|---|---|---|---|---|
| Ingredients (g) | 17 | 18 | 19 | 20 |
| Sugar | 99.74 | 64.3 | 34.3 | 44.2 |
| C*SweetM01521 (79.6 Brix) | 0.0 | 0.0 | 37.7 | 25.2 |
| Potassium sorbate | 0.27 | 0.27 | 0.27 | 0.27 |
| Citric acid | 0.70 | 0.70 | 0.70 | 0.70 |
| Orange compound | 25 | 25 | 25 | 25 |
| Truvia Reb A 80 | 0.00 | 0.15 | 0.15 | 0.15 |
| Ascorbic acid | 0.15 | 0.15 | 0.15 | 0.15 |
| Carbonated water (8g/L CO₂) up to | 1000 ml | 1000 ml | 1000 ml | 1000 ml |
| Beverage characteristics | | | | |
| °Brix | 11.0 | 7.70 | 7.7 | 7.7 |
| Acidity (%w/v ACA) | 0.281 | 0.281 | 0.281 | 0.281 |
| Density | 1.0412 | 1.0276 | 1.0276 | 1.0276 |
| Taste | | Licorice note Lingering aftertaste | Close to example 17 slight lingering aftertaste | Close to example 17 Very sligt lingering aftertaste |

**Table 5**

| Examples 21-24: 30% calorie reduction in tea peach drink | | | | |
|---|---|---|---|---|
| Ingredients (g) | 21 | 22 | 23 | 24 |
| Sugar | 61.1 | 39.1 | 29.2 | 19.1 |
| C*SweetM01521 (79.6 Brix) | 0.0 | 0.0 | 12.6 | 25.2 |
| Citric acid | 1.1 | 1.1 | 1.1 | 1.1 |
| Malic acid | 0.80 | 0.80 | 0.80 | 0.8 |
| Truvia Reb A 50 | 0.00 | 0.085 | 0.085 | 0.085 |
| Tea peach compound | 13.5 | 13.5 | 13.5 | 13.5 |
| Treated water up to | 1000 ml | 1000 ml | 1000 ml | 1000 ml |
| Beverage characteristics | | | | |
| °Brix | 7.00 | 4.90 | 4.90 | 4.90 |
| Acidity (%w/v ACA) | 0.193 | 0.193 | 0.193 | 0.193 |
| Density | 1.0248 | 1.0164 | 1.0164 | 1.0164 |
| Taste | | Licorice note and lingering aftertaste | Less lingering aftertaste and less licorice | Close to 21 example Very sligt lingering aftertaste |

**Table 6**

| Examples 25-28: 30% calorie reduction in energy drink | | | | |
|---|---|---|---|---|
| Ingredients (g) | 25 | 26 | 27 | 28 |
| Sugar | 104.3 | 68.8 | 28.2 | 18.8 |
| C*SweetM01521 (79.6 Brix) | 0.0 | 0.0 | 50.3 | 62.8 |
| Potassium sorbate | 0.27 | 0.27 | 0.27 | 0.27 |
| Citric acid | 5.20 | 5.2 | 5.2 | 5.2 |
| Trisosium citrate | 0.5 | 0.5 | 0.5 | 0.5 |
| Truvia Reb A 95 | 0.00 | 0.175 | 0.175 | 0.175 |
| Energy flavor compound | 90.0 | 90.0 | 90.0 | 90.0 |
| Treated water up to | 1000 ml | 1000 ml | 1000 ml | 1000 ml |
| Beverage characteristics | | | | |
| °Brix | 11.0 | 7.7 | 7.7 | 7.7 |
| Acidity (%w/v ACA) | 0.62 | 0.62 | 0.62 | 0.62 |
| Density | 1.0412 | 1.0276 | 1.0276 | 1.0276 |
| Taste | | Licorice note Lingering aftertaste | Close to example 25 Very sligth lingering aftertaste | Less sweet |

**Table 7**

| Examples 29-32: 30% calorie reduction in tropical nectar (45% juice) | | | | |
|---|---|---|---|---|
| Ingredients (g) | 29 | 30 | 31 | 32 |
| Sugar | 74.2 | 35.9 | 23.5 | 10.9 |
| C*SweetM01521 (79.6 Brix) | 0.0 | 0.0 | 15.6 | 31.4 |
| Truvia Reb A 95 | 0.00 | 0.12 | 0.12 | 0.12 |
| Tropical juice blend (44.5 Brix) | 110 | 110 | 110 | 110 |
| Treated water up to | 1000 ml | 1000 ml | 1000 ml | 1000 ml |
| Beverage characteristics | | | | |
| °Brix | 11.8 | 8.25 | 8.25 | 8.25 |
| Acidity (%w/v ACA) | 0.275 | 0.275 | 0.275 | 0.275 |
| Density | 1.0446 | 1.0299 | 1.0299 | 1.0299 |
| Taste | | Medium Licorice note Lingering aftertaste | Less lingering aftertaste and less licorice | Close to example 29 Very sligt lingering aftertaste |

**Table 8**

| Examples 33-34: 50% calorie reduction in carbonated cola | | |
|---|---|---|
| Ingredients (g) | 33 | 34 |
| Sugar syrup 65Brix | 163 | 48.1 |
| C*SweetM01521 (79 Brix) | 0.0 | 25 |
| Potassium sorbate | 0.2 | 0.2 |
| Cola flavor A | 1.5 | 1.5 |
| Cola flavor B | 1 | 1 |
| Truvia Reb A 80 | 0 | 0.09 |
| Carbonated water (8g/L CO₂) up to | 1000 ml | 1000 ml |
| Beverage characteristics | | |
| °Brix | 10.30 | 5.150 |
| Acidity (%w/v ACA) | 0.066 | 0.066 |
| Density | 1.03833 | 1.01739 |
| Taste | | Close to example 33 |

**Table 9: Brix conversion table**

| Brix | %w/v s.s. | Specific Gravity @20'c | | Brix | %w/v s.s. | Specific Gravity @20'c | | Brix | %w/v s.s. | Specific Gravity @20'c | | Brix | %w/v s.s. | Specific Gravity @20'c |
|---|---|---|---|---|---|---|---|---|---|---|---|---|---|---|
| 0,0 | 0,0000 | 1,0000 | | 6,5 | 6,6671 | 1,0257 | | 13,0 | 13,6838 | 1,0526 | | 19,5 | 21,0737 | 1,0807 |
| 0,1 | 0,1000 | 1,0004 | | 6,6 | 6,7723 | 1,0261 | | 13,1 | 13,7943 | 1,0530 | | 19,6 | 21,1915 | 1,0812 |
| 0,2 | 0,2002 | 1,0008 | | 6,7 | 6,8776 | 1,0265 | | 13,2 | 13,9049 | 1,0534 | | 19,7 | 21,3075 | 1,0816 |
| 0,3 | 0,3004 | 1,0012 | | 6,8 | 6,9829 | 1,0269 | | 13,3 | 14,0169 | 1,0539 | | 19,8 | 21,4256 | 1,0821 |
| 0,4 | 0,4006 | 1,0016 | | 6,9 | 7,0884 | 1,0273 | | 13,4 | 14,1276 | 1,0543 | | 19,9 | 21,5418 | 1,0825 |
| 0,5 | 0,5010 | 1,0019 | | 7,0 | 7,1939 | 1,0277 | | 13,5 | 14,2385 | 1,0547 | | 20,0 | 21,6600 | 1,0830 |
| 0,6 | 0,6014 | 1,0023 | | 7,1 | 7,2995 | 1,0281 | | 13,6 | 14,3494 | 1,0551 | | 20,1 | 21,7763 | 1,0834 |
| 0,7 | 0,7019 | 1,0027 | | 7,2 | 7,4052 | 1,0285 | | 13,7 | 14,4617 | 1,0556 | | 20,2 | 21,8948 | 1,0839 |
| 0,8 | 0,8025 | 1,0031 | | 7,3 | 7,5110 | 1,0289 | | 13,8 | 14,5728 | 1,0560 | | 20,3 | 22,0113 | 1,0843 |
| 0,9 | 0,9032 | 1,0035 | | 7,4 | 7,6176 | 1,0294 | | 13,9 | 14,6840 | 1,0564 | | 20,4 | 22,1299 | 1,0848 |
| 1,0 | 1,0039 | 1,0039 | | 7,5 | 7,7235 | 1,0298 | | 14,0 | 14,7952 | 1,0568 | | 20,5 | 22,2466 | 1,0852 |
| 1,1 | 1,1047 | 1,0043 | | 7,6 | 7,8295 | 1,0302 | | 14,1 | 14,9079 | 1,0573 | | 20,6 | 22,3634 | 1,0856 |
| 1,2 | 1,2056 | 1,0047 | | 7,7 | 7,9356 | 1,0306 | | 14,2 | 15,0193 | 1,0577 | | 20,7 | 22,4823 | 1,0861 |
| 1,3 | 1,3066 | 1,0051 | | 7,8 | 8,0418 | 1,0310 | | 14,3 | 15,1308 | 1,0581 | | 20,8 | 22,5992 | 1,0865 |
| 1,4 | 1,4077 | 1,0055 | | 7,9 | 8,1481 | 1,0314 | | 14,4 | 15,2424 | 1,0585 | | 20,9 | 22,7183 | 1,0870 |
| 1,5 | 1,5087 | 1,0058 | | 8,0 | 8,2544 | 1,0318 | | 14,5 | 15,3541 | 1,0589 | | 21,0 | 22,8354 | 1,0874 |
| 1,6 | 1,6099 | 1,0062 | | 8,1 | 8,3608 | 1,0322 | | 14,6 | 15,4672 | 1,0594 | | 21,1 | 22,9547 | 1,0879 |
| 1,7 | 1,7112 | 1,0066 | | 8,2 | 8,4673 | 1,0326 | | 14,7 | 15,5791 | 1,0598 | | 21,2 | 23,0720 | 1,0883 |
| 1,8 | 1,8126 | 1,0070 | | 8,3 | 8,5739 | 1,0330 | | 14,8 | 15,6924 | 1,0603 | | 21,3 | 23,1914 | 1,0888 |
| 1,9 | 1,9141 | 1,0074 | | 8,4 | 8,6806 | 1,0334 | | 14,9 | 15,8044 | 1,0607 | | 21,4 | 23,3089 | 1,0892 |
| 2,0 | 2,0156 | 1,0078 | | 8,5 | 8,7873 | 1,0338 | | 15,0 | 15,9165 | 1,0611 | | 21,5 | 23,4286 | 1,0897 |
| 2,1 | 2,1172 | 1,0082 | | 8,6 | 8,8950 | 1,0343 | | 15,1 | 16,0287 | 1,0615 | | 21,6 | 23,5462 | 1,0901 |
| 2,2 | 2,2189 | 1,0086 | | 8,7 | 9,0019 | 1,0347 | | 15,2 | 16,1424 | 1,0620 | | 21,7 | 23,6639 | 1,0905 |
| 2,3 | 2,3207 | 1,0090 | | 8,8 | 9,1089 | 1,0351 | | 15,3 | 16,2547 | 1,0624 | | 21,8 | 23,7838 | 1,0910 |
| 2,4 | 2,4226 | 1,0094 | | 8,9 | 9,2160 | 1,0355 | | 15,4 | 16,3671 | 1,0628 | | 21,9 | 23,9039 | 1,0915 |
| 2,5 | 2,5245 | 1,0098 | | 9,0 | 9,3231 | 1,0359 | | 15,5 | 16,4812 | 1,0633 | | 22,0 | 24,0218 | 1,0919 |
| 2,6 | 2,6265 | 1,0102 | | 9,1 | 9,4303 | 1,0363 | | 15,6 | 16,5937 | 1,0637 | | 22,1 | 24,1420 | 1,0924 |
| 2,7 | 2,7286 | 1,0106 | | 9,2 | 9,5376 | 1,0367 | | 15,7 | 16,7064 | 1,0641 | | 22,2 | 24,2602 | 1,0928 |
| 2,8 | 2,8305 | 1,0109 | | 9,3 | 9,6450 | 1,0371 | | 15,8 | 16,8207 | 1,0646 | | 22,3 | 24,3806 | 1,0933 |
| 2,9 | 2,9328 | 1,0113 | | 9,4 | 9,7525 | 1,0375 | | 15,9 | 16,9335 | 1,0650 | | 22,4 | 24,4989 | 1,0937 |
| 3,0 | 3,0351 | 1,0117 | | 9,5 | 9,8610 | 1,0380 | | 16,0 | 17,0464 | 1,0654 | | 22,5 | 24,6195 | 1,0942 |
| 3,1 | 3,1375 | 1,0121 | | 9,6 | 9,9686 | 1,0384 | | 16,1 | 17,1610 | 1,0659 | | 22,6 | 24,7380 | 1,0946 |
| 3,2 | 3,2400 | 1,0125 | | 9,7 | 10,0764 | 1,0388 | | 16,2 | 17,2741 | 1,0663 | | 22,7 | 24,8588 | 1,0951 |
| 3,3 | 3,3426 | 1,0129 | | 9,8 | 10,1842 | 1,0392 | | 16,3 | 17,3872 | 1,0667 | | 22,8 | 24,9797 | 1,0956 |
| 3,4 | 3,4452 | 1,0133 | | 9,9 | 10,2920 | 1,0396 | | 16,4 | 17,5021 | 1,0672 | | 22,9 | 25,0984 | 1,0960 |
| 3,5 | 3,5480 | 1,0137 | | 10,0 | 10,4000 | 1,0400 | | 16,5 | 17,6154 | 1,0676 | | 23,0 | 25,2195 | 1,0965 |
| 3,6 | 3,6508 | 1,0141 | | 10,1 | 10,5080 | 1,0404 | | 16,6 | 17,7288 | 1,0680 | | 23,1 | 25,3384 | 1,0969 |
| 3,7 | 3,7537 | 1,0145 | | 10,2 | 10,6172 | 1,0409 | | 16,7 | 17,8440 | 1,0685 | | 23,2 | 25,4597 | 1,0974 |
| 3,8 | 3,8566 | 1,0149 | | 10,3 | 10,7254 | 1,0413 | | 16,8 | 17,9575 | 1,0689 | | 23,3 | 25,5787 | 1,0978 |
| 3,9 | 3,9597 | 1,0153 | | 10,4 | 10,8337 | 1,0417 | | 16,9 | 18,0712 | 1,0693 | | 23,4 | 25,7002 | 1,0983 |
| 4,0 | 4,0628 | 1,0157 | | 10,5 | 10,9421 | 1,0421 | | 17,0 | 18,1866 | 1,0698 | | 23,5 | 25,8194 | 1,0987 |
| 4,1 | 4,1660 | 1,0161 | | 10,6 | 11,0505 | 1,0425 | | 17,1 | 18,3004 | 1,0702 | | 23,6 | 25,9411 | 1,0992 |
| 4,2 | 4,2693 | 1,0165 | | 10,7 | 11,1590 | 1,0429 | | 17,2 | 18,4143 | 1,0706 | | 23,7 | 26,0629 | 1,0997 |
| 4,3 | 4,3727 | 1,0169 | | 10,8 | 11,2676 | 1,0433 | | 17,3 | 18,5300 | 1,0711 | | 23,8 | 26,1824 | 1,1001 |
| 4,4 | 4,4761 | 1,0173 | | 10,9 | 11,3774 | 1,0438 | | 17,4 | 18,6441 | 1,0715 | | 23,9 | 26,3043 | 1,1006 |
| 4,5 | 4,5797 | 1,0177 | | 11,0 | 11,4862 | 1,0442 | | 17,5 | 18,7583 | 1,0719 | | 24,0 | 26,4240 | 1,1010 |
| 4,6 | 4,6833 | 1,0181 | | 11,1 | 11,5951 | 1,0446 | | 17,6 | 18,8742 | 1,0724 | | 24,1 | 26,5462 | 1,1015 |
| 4,7 | 4,7870 | 1,0185 | | 11,2 | 11,7040 | 1,0450 | | 17,7 | 18,9886 | 1,0728 | | 24,2 | 26,6684 | 1,1020 |
| 4,8 | 4,8907 | 1,0189 | | 11,3 | 11,8130 | 1,0454 | | 17,8 | 19,1047 | 1,0733 | | 24,3 | 26,7883 | 1,1024 |
| 4,9 | 4,9946 | 1,0193 | | 11,4 | 11,9233 | 1,0459 | | 17,9 | 19,2192 | 1,0737 | | 24,4 | 26,9108 | 1,1029 |
| 5,0 | 5,0985 | 1,0197 | | 11,5 | 12,0325 | 1,0463 | | 18,0 | 19,3338 | 1,0741 | | 24,5 | 27,0309 | 1,1033 |
| 5,1 | 5,2025 | 1,0201 | | 11,6 | 12,1417 | 1,0467 | | 18,1 | 19,4503 | 1,0746 | | 24,6 | 27,1535 | 1,1038 |
| 5,2 | 5,3066 | 1,0205 | | 11,7 | 12,2511 | 1,0471 | | 18,2 | 19,5650 | 1,0750 | | 24,7 | 27,2762 | 1,1043 |
| 5,3 | 5,4108 | 1,0209 | | 11,8 | 12,3605 | 1,0475 | | 18,3 | 19,6817 | 1,0755 | | 24,8 | 27,3966 | 1,1047 |
| 5,4 | 5,5150 | 1,0213 | | 11,9 | 12,4712 | 1,0480 | | 18,4 | 19,7966 | 1,0759 | | 24,9 | 27,5195 | 1,1052 |
| 5,5 | 5,6194 | 1,0217 | | 12,0 | 12,5808 | 1,0484 | | 18,5 | 19,9116 | 1,0763 | | 25,0 | 27,6400 | 1,1056 |
| 5,6 | 5,7238 | 1,0221 | | 12,1 | 12,6905 | 1,0488 | | 18,6 | 20,0285 | 1,0768 | | 25,1 | 27,7631 | 1,1061 |
| 5,7 | 5,8283 | 1,0225 | | 12,2 | 12,8002 | 1,0492 | | 18,7 | 20,1436 | 1,0772 | | 25,2 | 27,8863 | 1,1066 |
| 5,8 | 5,9328 | 1,0229 | | 12,3 | 12,9101 | 1,0496 | | 18,8 | 20,2608 | 1,0777 | | 25,3 | 28,0071 | 1,1070 |
| 5,9 | 6,0375 | 1,0233 | | 12,4 | 13,0212 | 1,0501 | | 18,9 | 20,3761 | 1,0781 | | 25,4 | 28,1305 | 1,1075 |
| 6,0 | 6,1422 | 1,0237 | | 12,5 | 13,1313 | 1,0505 | | 19,0 | 20,4915 | 1,0785 | | 25,5 | 28,2515 | 1,1079 |
| 6,1 | 6,2470 | 1,0241 | | 12,6 | 13,2413 | 1,0509 | | 19,1 | 20,6089 | 1,0790 | | 25,6 | 28,3750 | 1,1084 |
| 6,2 | 6,3519 | 1,0245 | | 12,7 | 13,3515 | 1,0513 | | 19,2 | 20,7245 | 1,0794 | | 25,7 | 28,4987 | 1,1089 |
| 6,3 | 6,4569 | 1,0249 | | 12,8 | 13,4618 | 1,0517 | | 19,3 | 20,8421 | 1,0799 | | 25,8 | 28,6199 | 1,1093 |
| 6,4 | 6,5619 | 1,0253 | | 12,9 | 13,5734 | 1,0522 | | 19,4 | 20,9578 | 1,0803 | | 25,9 | 28,7438 | 1,1098 |

## Claims

1. A composition comprising maltose and steviol glycoside, said composition further comprising one or more nutritive sweeteners, **characterized in that** the maltose content of the composition is in a range of from 2.25 to 52.5 w/w% based on the one or more nutritive sweeteners and wherein the weight ratio maltose to steviol glycoside is from 30 to 480.

2. The composition according to claim 1, wherein the maltose is present in said composition in the form of a maltose containing syrup having a maltose content of from 25 to 80 weight/weight % on dry base of the syrup.

3. The composition according to claim 2, wherein the maltose containing syrup is a glucose syrup.

4. The composition according to claim 2 or 3, wherein the weight ratio of the dry substance of said maltose containing syrup to said steviol glycoside is from 120 to 600.

5. The composition of any one of claims 1 to 4, **characterized in that** the steviol glycoside has a purity of at least 80%.

6. The composition of any one of claims 1 to 5, wherein the nutritive sweetener is selected from the group of sucrose, high fructose corn syrup, fructose, glucose, dextrose, white grape juice, deionised apple juice, chicory, honey, inverted sugar and mixtures of two or more thereof.

7. A beverage comprising the composition of any one of claims 1 to 6 and other beverage ingredients.

8. The beverage of claim 7, **characterized in that** it has a caloric value of 20kcal/100ml or less, preferably 15kcal/100ml or less, more preferably 10kcal/100ml or less.

9. A method for making a food, beverage, feed, or pet food product comprising the step of adding the composition of any one of claims 1-6 to the food, beverage, feed, or pet food product in the manufacturing process.

10. The method of claim 9, wherein the food product is a beverage.

11. The method of claim 9 or 10, wherein the maltose in the composition is in the form of a maltose containing syrup.

## Patentansprüche

1. Zusammensetzung, umfassend Maltose und Steviolglycosid, wobei die Zusammensetzung weiter einen oder mehrere Zuckeraustauschstoffe umfasst, **dadurch gekennzeichnet, dass** der Maltosegehalt der Zusammensetzung in einem Bereich von 2,25 bis 52,5 Gew./Gew.-%, basierend auf dem einen oder mehreren Zuckeraustauschstoffen, liegt und wobei das Gewichtsverhältnis von Maltose zu Steviolglycosid von 30 bis 480 ist.

2. Zusammensetzung nach Anspruch 1, wobei die Maltose in der Zusammensetzung in Form eines Maltose enthaltenden Sirups mit einem Maltosegehalt von 25 bis 80 Gewicht/Gewicht-% auf einer Trockenbasis des Sirups vorliegt.

3. Zusammensetzung nach Anspruch 2, wobei der Maltose enthaltende Sirup ein Glucosesirup ist.

4. Zusammensetzung nach Anspruch 2 oder 3, wobei das Gewichtsverhältnis der Trockensubstanz des Maltose enthaltenden Sirups zu dem Steviolglycosid von 120 bis 600 ist.

5. Zusammensetzung nach einem der Ansprüche 1 bis 4, **dadurch gekennzeichnet, dass** das Steviolglycosid eine Reinheit von mindestens 80 % aufweist.

6. Zusammensetzung nach einem der Ansprüche 1 bis 5, wobei der Zuckeraustauschstoff ausgewählt ist aus der Gruppe von Saccharose, Maissirup mit hohem Fructosegehalt, Fructose, Glucose, Traubenzucker, weißem Traubensaft, desionisiertem Apfelsaft, Zichorie, Honig, Invertzucker und Gemischen von zwei oder mehreren davon.

7. Getränk, umfassend die Zusammensetzung nach einem der Ansprüche 1 bis 6 und andere Getränkebestandteile.

8. Getränk nach Anspruch 7, **dadurch gekennzeichnet, dass** es einen Kalorienwert von 20 kcal/100 ml oder weniger, vorzugsweise 15 kcal/100 ml oder weniger, bevorzugter 10 kcal/100 ml oder weniger aufweist.

9. Verfahren zur Herstellung eines Nahrungsmittels, Getränks, Futtermittels oder Haustier-Nahrungsmittel-Produkts, umfassend den Schritt von Zusetzen der Zusammensetzung nach einem der Ansprüche 1-6 zu dem Nahrungsmittel, Getränk, Futtermittel oder Haustier-Nahrungsmittel-Produkt bei dem Herstellungsverfahren.

10. Verfahren nach Anspruch 9, wobei das Nahrungsmittel-Produkt ein Getränk ist.

11. Verfahren nach Anspruch 9 oder 10, wobei die Maltose in der Zusammensetzung in Form von einem Maltose enthaltenden Sirup vorliegt.

## Revendications

1. Composition comprenant du maltose et du glycoside de stéviol, ladite composition comprenant en outre un ou plusieurs édulcorants nutritifs, **caractérisée en ce que** la teneur en maltose de la composition est comprise entre 2,25 et 52,5 % p/p sur la base du ou des édulcorants nutritifs et dans laquelle le ratio pondéral du maltose par rapport au glycoside de stéviol est de 30 à 480.

2. Composition selon la revendication 1, dans laquelle le maltose est présent dans ladite composition sous la forme d'un sirop contenant du maltose ayant une teneur en maltose de 25 à 80 % poids/poids sur base sèche du sirop.

3. Composition selon la revendication 2, dans laquelle le sirop contenant du maltose est un sirop de glucose.

4. Composition selon la revendication 2 ou 3, dans laquelle le ratio pondéral de la substance sèche dudit sirop contenant du maltose par rapport audit glycoside de stéviol est de 120 à 600.

5. Composition selon l'une quelconque des revendications 1 à 4, **caractérisée en ce que** le glycoside de stéviol a une pureté d'au moins 80%.

6. Composition selon l'une quelconque des revendications 1 à 5, dans laquelle l'édulcorant nutritif est choisi dans le groupe comprenant le saccharose, le sirop de maïs riche en fructose, le fructose, le glucose, le dextrose, le jus de raisin blanc, le jus de pomme désionisé, la chicorée, le miel et des mélanges de deux ou plusieurs de ceux-ci.

7. Boisson comprenant la composition de l'une quelconque des revendications 1 à 6 et d'autres ingrédients de boisson.

8. Boisson selon la revendication 7, **caractérisée en ce qu'**elle a une valeur calorique inférieure ou égale à 20 kcal/100 ml, de préférence inférieure ou égale à 15 kcal/100 ml, plus préférablement inférieure ou égale à 10kcal/100 ml.

9. Procédé de fabrication d'un aliment, d'une boisson, d'une alimentation ou d'un produit alimentaire pour animaux de compagnie comprenant l'étape d'ajouter la composition de l'une quelconque des revendications 1 à 6 à l'aliment, à la boisson, à l'alimentation ou au produit alimentaire pour animaux de compagnie.

10. Procédé selon la revendication 9, dans lequel le produit alimentaire est une boisson.

11. Procédé selon la revendication 9 ou 10, dans lequel le maltose dans la composition est sous la forme d'un sirop contenant du maltose.
